# EUROPÄISCHE PATENTSCHRIFT

(11) **EP 0 904 743 B1**
(45) Veröffentlichungstag und Bekanntmachung des Hinweises auf die Patenterteilung: **08.12.2004**
(21) Anmeldenummer: 98118009.4
(22) Anmeldetag: 23.09.1998
(51) Int. Cl.: A61C 13/00

(54) **Verfahren zur Herstellung von Zahnersatz und Implantaten mit CAD/CAM-Geräten unter Einbeziehung vorgefertigter Teile**
Method for the fabrication of dental prosthesis and implants by means of CAD/CAM-machines using prefabricated elements
Méthode de fabrication de prothèses dentaires et implants par moyens d'appareils CAD/CAM en utilisant des éléments préfabriqués

(30) Priorität: 26.09.1997 DE 19742620
(43) Veröffentlichungstag der Anmeldung: 31.03.1999
(73) Patentinhaber: Sirona Dental Systems GmbH, 64625 Bensheim (DE)
(72) Erfinder: Saliger, Günter Dipl.-Phys., Dr.rer.nat., 64625 Bensheim (DE)
(74) Vertreter: Sommer, Peter

(56) Entgegenhaltungen:
- DE-A- 19 513 881
- DE-U- 29 609 912

## Beschreibung

Die Erfindung bezieht sich auf ein Verfahren zur Herstellung von Zahnersatz und Implantaten mit CAD/CAM-Geräten unter Einbeziehung vorgefertigter Teile, bei dem nach Vermessung eines Objekts mittels eines Meßsystems, z.B. einer Cerec-Mundkamera, ein Zahnersatzteil mit Computerhilfe konstruiert und anschließend maschinell aus einem Keramikrohling ausgearbeitet wird. Diese Verfahrensweise wird als CAD/CAM-Prozeß bezeichnet.

Mit dem Cerec-Verfahren ist es bereits heute möglich, die verschiedensten Formen der Einzelzahnversorgung durchzuführen. Eine besondere Attraktivität des Verfahrens liegt dabei in der sog. chairside-Anwendung, d.h. der direkten Anwendung am Patientenstuhl, der adhäsiven Befestigungstechnologie und den zur Restauration verwendeten Werkstoffen, siehe Fachzeitschrift ZWR 7, 1990, 99. Jahrgang, "Die Herstellung und Eingliederung von computergefrästen Keramik-Inlays" von N. Hofmann.

Wenn man das Indikationsfeld dieses direkten Verfahrens erweitern will, stößt man aber sofort an einige Grenzen:

Zur Herstellung von Brücken sind die heute für das Cerec-Verfahren verwendbaren Keramiken ungeeignet. Keramiken mit geeigneter Materialkenngröße lassen sich nicht mit dem Cerec-Gerät bearbeiten.

Die Herstellung von Kronen einschließlich eines pulpären oder parapulpären Stiftes ist nicht möglich, weil die Cerec-Mundkamera derartige Präparationen nicht vermessen kann und weil die Festigkeit der zur Verfügung stehenden Materialien dafür ungeeignet ist.

Ossal oder alveolar getragene Implantate lassen sich nicht direkt mit Cerec berechnen, weil die Einschubrichtung des Implantats nicht bekannt ist und weil der übliche Implantataufbau ungeeignet ist für die Vermessung mit dem Cerec-System.

Zur prothetischen Versorgung mit Kronen und Brücken und in der Implantologie kommt heute immer noch ein Verfahren zur Anwendung, bei dem der Zahnarzt in den Fällen von Implantaten und Stiftaufbauten die Gerüststruktur herstellt bzw. montiert. Danach wird von dem so aufbereiteten Präparationsfeld ebenso wie bei der Versorgung mit einer Brücke ein konventioneller Abdruck genommen. Auf der Basis dieses Abdrucks stellt danach ein Zahntechniker den funktionellen Zahnersatz her, den der Zahnart in einem weiteren Arbeitsschritt dann eingliedert.

Zwar können diese angesprochenen Einsatzgebiete auch heute bereits teilweise durch ein indirektes Vorgehen für das Cerec-Verfahren erschlossen werden. Hierzu müßte jedoch in allen Fällen zunächst eine zahntechnisch hergestellte Substruktur konventionell eingegliedert werden. Diese Substruktur müßte in einer Weise gefertigt sein, daß sie mit der Cerec-Mundkamera vermessen werden kann. Auf der Basis dieser Meßdaten würde dann die Konstruktion des Zahnersatzes am Cerec-Gerät erfolgen. Die schließlich mit dem Cerec-Gerät hergestellten Werkstücke würden dann mit der Substruktur verbunden und so den funktionellen Zahnersatz ergeben. Eine Indikationsausweitung des Cerec-Systems hin zu noch größeren Restaurationen führt also unter Berücksichtigung des Standes der Technik bezüglich zahnärztlicher Werkstoffe und der vorhandenen Schleiftechnologie zwangsläufig zu einer Arbeitsweise, die wegführt von dem chairside/single appointment-Konzept des Cerec-Systems.

Aus Luthardt, R., Musil. R.: CAD/CAM-gefertigter Zahnersatz aus Titan und Zirkonoxid Das Precident-DCS-System für Kronen und Brücken" in: Phillip Journal 7-8/96, Seiten 217 bis 225, ist ein Verfahren bekannt, bei der bei einem CAD/CAM-System eine Software der Präparationsgrenze und der Stumpfoberfläche erfaßt und die Ausrichtung der Stümpfe zueinander steuert sowie die Konstruktion der Kronen- bzw. Brückengerüste und die Veränderung von bestimmten Betriebsparametern erleichtert. Diese Software übernimmt weiterhin die Steuerung einer CNC-Bearbeitungseinheit. Die Datenerfassung erfolgt vorteilhafterweise durch mechanisches Abtasten eines Modells, da optische Systeme noch nicht die notwendige Auflösung besitzen. Die Konstruktion der Brücken erfolgt durch Eingabe der entsprechenden Parameter, woraufhin die Brücken aus einem zur Verfügung stehenden Sortiment von Rohlingen herausgearbeitet werden. Im Anschluß an die Gerüstanprobe erfolgt die Verblendung des Gerüsts in herkömmlicher Weise mit Zahnersatzteilen.

Aus dem Dokument DE 29609912 ist ein Verfahren zur Herstellung von Zahnersatz mit CAD/CAM-Geräten bekannt, bei den nach Vermessung eines Objekts mittels eines Meßsystems ein Zahnersatzteil mit Computerhifle konstruiert und anschließend anhand der Meßdaten maschinell hergestellt wird.

Der Erfindung liegt daher die Aufgabe zugrunde, ein Verfahren anzugeben, das die dargestellten Gebiete des Zahnersatzes, der Erstellung von Brücken sowie der Implantologie einer direkten Versorgung mit einem Meßsystem zugänglich macht.

Zur Lösung dieser Aufgabe ist erfindungsgemäß vorgesehen, daß durch Verwendung definierter Präparationsinstrumente und/oder durch Verwendung vorgefertigter Zahnergänzungsteile und/oder anderer Ergänzungsteile eine Ausgangssituation für den CAD/CAM-Prozeß geschaffen wird, die mindestens eine Teilfläche mit im Softwareprogramm des CAD/CAM-Prozesses bekannter geometrischer Form enthält, und daß die Teilfläche vom Softwareprogramm dazu genutzt wird, eine optimale Passung zwischen den vorgefertigten Teilen und dem individuell zu erstellenden Zahnersatz zu erreichen, indem zur Berechnung des Zahnersatzes und/oder des Implantats im Bereich der bekannten Teilflächen die bekannte geometrische Form verwendet wird oder eine Korrektur der Vermessung im Bereich der Teilflächen erfolgt.

Zwar ist aus der DE-A-27 44 564 die Verwendung einer Werkzeugkombination zur Einsetzung von Zahnimplantaten bekannt, bei dem mittels einer Fräse die Wand einer durch Zahnextraktion entstandenen Alveole glättbar ist, wobei mittels eines Gewindeschneiders in die geglättete Alveolenwand ein Gewinde einschneidbar ist, das einem Gegengewinde an dem mit einem Stift versehenen Implantat entspricht. Die derartig erzeugte Ausgangssituation wird jedoch nicht dazu verwendet, im Rahmen eines CAD/CAM-Prozesses eine Teilfläche mit bekannter geometrischer Form zu schaffen.

Besonders geeignet als Meßsystem ist eine Cerec-Mundkamera, da hier eine Handlichkeit und Genauigkeit erreicht wird, die vorteilhaft ist.

Neben der Verwendung von Präparationsinstrumenten, die in ihrer geometrischen Abmessung auf industriell vorgefertigte Werkstücke abgestimmt sind, hat es sich dabei in Ausgestaltung der Erfindung als besonders zweckmäßig erwiesen, Präparationsinstrumente und/oder vorgefertigte Werkstücke zu verwenden, die mit sich in der Präparation abbildenden und mit einer nach dem Verfahren der aktiven Triangulation arbeitenden Einheit vermeßbaren Abschnitten versehen sind.

Beispielsweise können spezielle Fräser mit einem konischen Abschnitt vorgesehen sein , so daß unabhängig von der Richtung, mit der beispielsweise eine Präparation in einen Wurzelkanal eingebracht werden muß, auf jeden Fall eine von der Cerec-Mundkamera erfaßbare Fläche zur Verfügung steht.

Die vorgefertigten Werkstücke, also beispielsweise Wurzelstifte, Implantatkavitäten oder dergleichen, sollen bevorzugt so geformt sein, daß sie von einer Cerec-Mundkamera nach dem Verfahren der aktiven Triangulation vermessen werden können, was bedeutet, daß man die Formgebung so vornimmt, daß man die Begrenzungen der Aufnahmetechnik solcher Cerec-Mundkameras, die im wesentlichen parallel zur Einschubrichtung verlaufende Flächen nicht erkennen und vermessen kann, mit berücksichtigt.

Durch die Verwendung von Präparationsinstrumenten und/oder vorgefertigten Werkstücken geeigneter Formgebung läßt sich die manuelle Ausrichtung der Cerec-Mundkamera entlang der Einschubachse der Präparation unterstützen.

Schließlich liegt es auch noch im Rahmen der Erfindung, in mehreren Schritten derart zu arbeiten, daß die konfektionierten Werkstücke mit vermessen werden, um deren genaue Form und Lage, vorzugsweise über eine Ausgleichsrechnung, zu bestimmen.

Weitere Vorteile, Merkmale und Einzelheiten der Erfindung ergeben sich aus der nachfolgenden Beschreibung einiger Ausführungsbeispiele sowie anhand der Zeichnung. Dabei zeigen:
- Fig. 1: einen speziell geformten Fräser für die Zahnerhaltung mit Hilfe eines Wurzelstifts,
- Fig. 2: einen Wurzelstift, der in Verbindung mit dem speziellen Fräser nach Fig. 1 eingesetzt werden kann,
- Fig. 3: einen Schnitt durch den Restzahn nach Einbringen eines Wurzelkanals mit dem Fräser nach Fig. 1,
- Fig. 4: den nach dem Vermessen mit der Cerec-Mundkamera standardgemäß restaurierten Zahnersatz,
- Fig. 5: einen Schnitt durch den fertiggestellten Zahn,
- Fig. 6: einen Implantatfräser,
- Fig. 7: ein auf den Fräser nach Fig. 6 abgestimmtes Implantat,
- Fig. 8: einen Paßkörper für den Implantatunterbau,
- Fig. 9: einen schematischen Schnitt durch den fertigen implantierten Zahn, der mit einer CAD/CID Krone versorgt ist,
- Fig. 10: einen speziellen Fräser für die Anwendung des erfindungsgemäßen Verfahrens zur Herstellung von Brücken,
- Fig. 11: einen im wesentlichen horizontalen Schnitt durch die Ankerzähne für die Brücke, und
- Fig. 12: eine Seitenansicht und eine Aufsicht der Brücke.

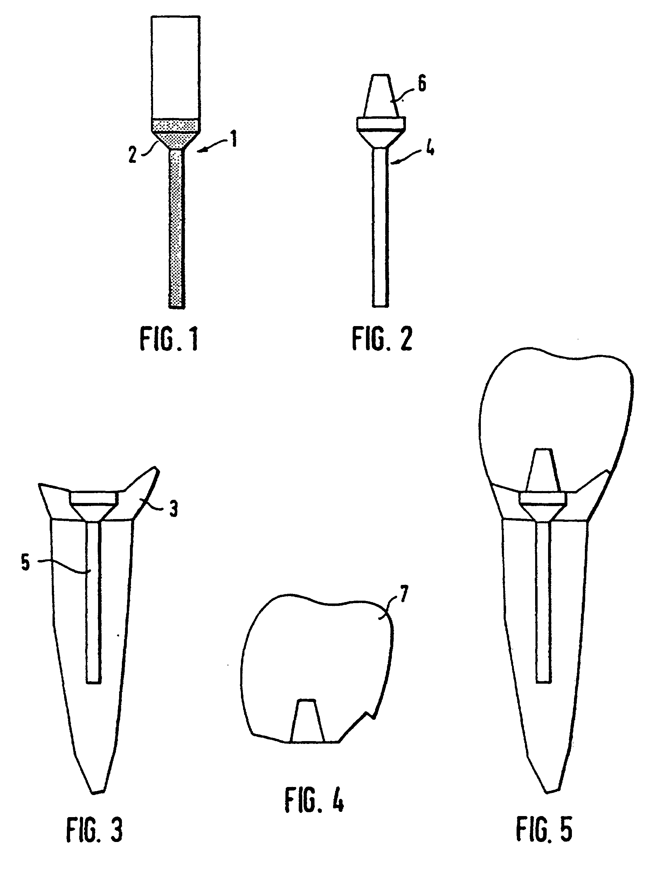

Bezugnehmend auf Fig. 1 wird kurz die Ausgestaltung des erfindungsgemäßen Verfahrens im Rahmen der Zahnerhaltung beispielhaft beschrieben.

Mit einem speziell geformten Fräser 1, der einen konischen Abschnitt 2 aufweist, wird ein Kavum in den Wurzelkanal des Zahnstumpfs 3 getrieben. Der Fräser wird so weit vorgetrieben, bis der punktierte Bereich am Fräser 1 gerade nicht mehr sichtbar ist. Der so präparierte Zahnstumpf 3 gemäß Fig. 3 wird nach dem Cerec-Verfahren vermessen, wobei die Aufnahmerichtung so gewählt ist, daß sie der Einschubachse des in Fig. 2 abgebildeten Stiftes 4 entspricht. Dies geschieht dadurch, daß die Kamera so ausgerichtet wird, daß die zylinderförmigen Partien des Kavums 5 nicht sichtbar sind. Die Schärfenebene wird dabei so gewählt, daß die eigentliche Präparation des Zahns ggf. auch zu Lasten des Wurzelkanals scharf abgebildet ist.

Danach erfolgt auf der Basis dieser Daten die standardmäßige Konstruktion der Restauration, wobei der Bereich des Kavums 5 durch geeignete Techniken (z.B. Markieren) von der schlußendlichen Berechnung des Paßkörpers ausgenommen wird. In diesen Bereichen wird statt dessen der dem Rechner bekannte obere Kopf 6 des Wurzelstifts 4 als Negativabdruck (Fig. 4) eingesetzt.

In den Wurzelkanal wird dann der auf die Form des Fräsers 1 abgestimmte vorgefertigte, aus hochfestem Material bestehende Stift mit der dem Cerec-Programm bekannten Form gemäß Fig. 2 eingesetzt. Aufgrund der gewählten Aufnahmetechnik ist die Einschubachse des Stiftes bekannt. Sie liegt in der selben Achse wie die Aussparung der Krone 7 in Fig. 4, die nun in bekannter Weise, z.B. zu adhäsive Befestigung, mit dem Stiftoberteil verbunden wird und so den vollständigen Zahnersatz ergibt, wie er in Fig. 5 zu erkennen ist.

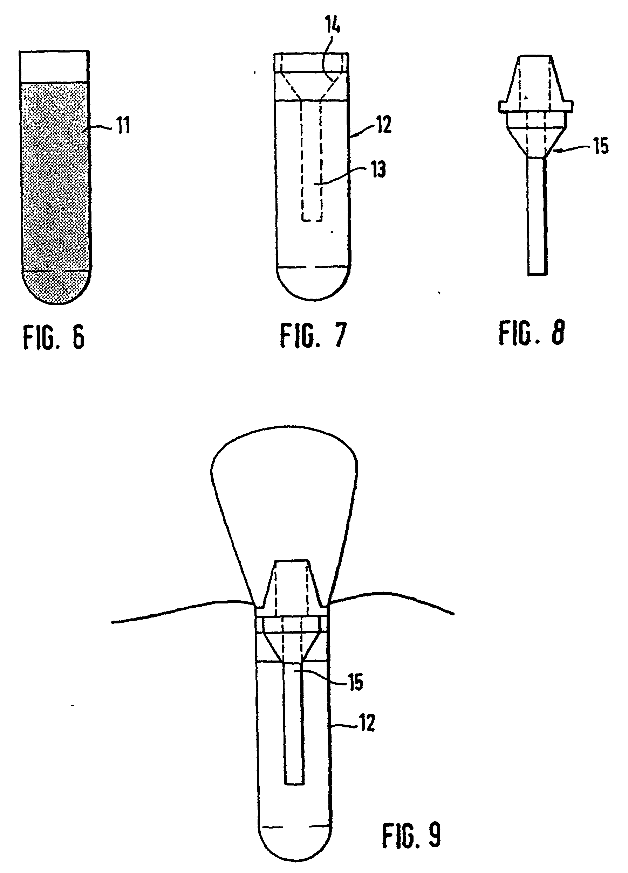

Bei der Herstellung von Implantaten nach dem erfindungsgemäß ausgestalteten Cerec-Verfahren (Figuren 6 bis 9) wird mit Hilfe eines speziell geformten und in seiner Größe auf das Implantat abgestimmten Fräsers 11 die Alveole zur Aufnahme des Implantats 12 vorbereitet. Das Implantat 12, das einen maßgenauen zylindrischen Abschnitt 13 mit konischem Auslauf 14 besitzt, wird danach inkorporiert.

Der an dem Implantat 12 angebrachte Abschnitt kann dazu verwendet werden, die Kamera direkt gemäß der Einschubachse des Implantats zu positionieren. Der konische obere Teil kann dazu dienen, über eine Ausgleichsrechnung diese Einschubachse selbsttätig zu ermitteln, ohne daß der Anwender die Kamera manuell entsprechend positionieren müßte.

Mit der Cerec-Mundkamera wird das auf diese Weise eingebrachte Implantat inklusive der approximalen und antagonistischen Nachbarschaft vermessen und der Zahnersatz wird in hergebrachter Weise mit dem Cerec-Gerät konstruiert. Bei der Berechnung des Paßkörpers wird der Implantataufbau 15 gemäß Fig. 8 sofort mit berücksichtigt, ohne daß er vermessen werden müßte. Gleichzeitig gibt das Programm aufgrund der Meßund Konstruktionsdaten die günstigste Orientierung für den Implantataufbau an, sofern ein nichtzentrischer Konus oder verschieden große Koni gewählt werden können.

Schließlich werden das Implantat und der Aufbau miteinander verbunden und die konventionelle Cerec-Restauration wird damit, z.B. adhäsiv, verbunden (Fig. 9).

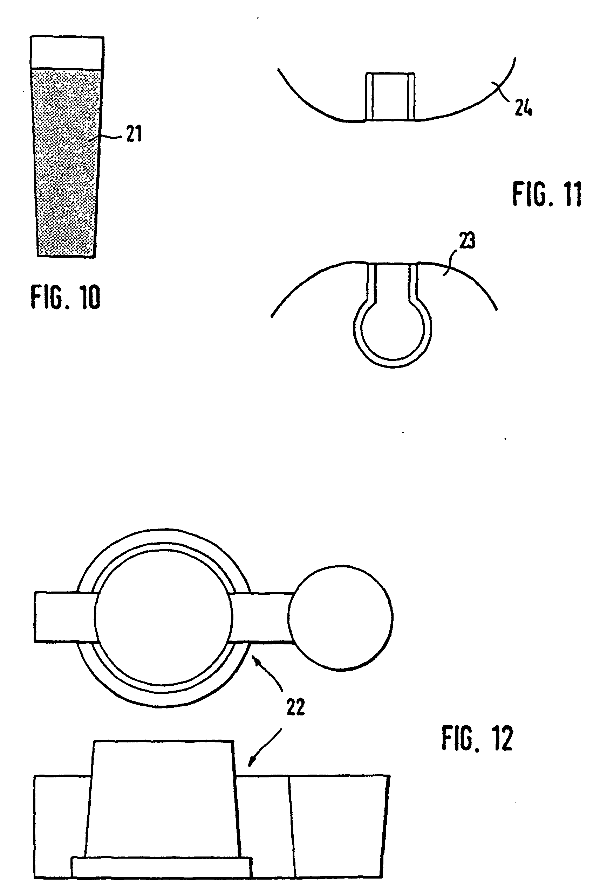

Zur Erstellung einer Brücke mit dem erfindungsgemäß ausgestalteten Cerec-Verfahren werden mit einem speziellen Fräser 21 gemäß Fig. 10, der in seiner Außenform auf die Verankerungsflächen des individuell vorgefertigten Brückengliedes 22 gemäß Fig. 12 abgestimmt ist, die Ankerzähne 23 und 24 so beschliffen, daß zumindest einseitig Anpassungsflächen vorhanden sind, die eine Orientierungsbestimmung für die Inkorporation des vorgefertigten Brückengliedes ermöglichen.

Das so hergestellte Präparationsfeld wird mit der Cerec-Mundkamera aufgenommen, wobei die Anpassungsflächen der manuellen Ausrichtung der Kamera dienen.

Wiederum berechnet das Programm aus der Meßaufnahme in Verbindung mit Benutzereingaben die geometrische Gestalt dieser Flächen, nutzt diese, um deren Orientierung relativ zur Zahnsubstanz festzustellen und um einen entsprechenden Vorschlag für das zu verwendende Brückenglied 22 zu machen. Während das Cerec-Gerät den oder die auf das vorgefertigte Brückenglied aufzusetzenden Paßkörper herstellt, wird das konfektionierte Brückenglied 22 nach Fig. 12 inkorporiert. Danach werden die vom Cerec-Gerät hergestellten Paßkörper z.B. adhäsiv mit dem vorgefertigten Brückenglied 22 verbunden.

## Patentansprüche

1. Verfahren zur Herstellung von Zahnersatz und Implantaten mit CAD/CAM-Geräten unter Einbeziehung vorgefertigter Teile, bei dem nach Vermessung eines Objekts mittels eines Meßsystems ein Zahnersatzteil mit Computerhilfe konstruiert und anschließend anhand der Meßdaten maschinell aus einem Keramikrohling herausgearbeitet wird
**dadurch gekennzeichnet, daß** durch Verwendung definierter Präparationsinstrumente und/oder durch Verwendung vorgefertigter Zahnergänzungsteile und/oder anderer Ergänzungsteile eine Ausgangssituation für den CAD/CAM-Prozeß geschaffen wird, die mindestens eine Teilfläche mit im Softwareprogramm des CAD/CAM-Prozesses bekannter geometrischer Form enthält und daß die Teilfläche vom Softwareprogramm dazu genutzt wird, eine optimale Passung an der Teilfläche zwischen den vorgefertigten Teilen und dem individuell zu erstellenden Zahnersatz zu erreichen, indem zur Berechnung des Zahnersatzes und/oder des Implantats im Bereich der bekannten Teilfläche die bekannte geometrische Form verwendet wird oder eine Korrektur der Vermessung im Bereich der Teilfläche erfolgt.

2. Verfahren nach Anspruch 1,
**dadurch gekennzeichnet, daß** das Meßsystem eine Cerec-Mundkamera ist.

3. Verfahren nach Anspruch 1 oder 2,
**dadurch gekennzeichnet, daß** Präparationsinstrumente verwendet werden, die in ihren geometrischen Abmessungen auf industriell vorgefertigte Werkstücke abgestimmt sind.

4. Verfahren nach einem der Ansprüche 1 bis 3,
**dadurch gekennzeichnet, daß** Präparationsinstrumente und/oder vorgefertigte Werkstücke verwendet werden, die mit sich in der Präparation abbildenden und mit einem Meßsystem vermeßbaren Abschnitten versehen sind.

5. Verfahren nach Anspruch 2 und 4,
**dadurch gekennzeichnet, daß** das Meßsystem nach dem Verfahren der aktiven Triangulation arbeitet.

6. Verfahren nach Anspruch 4 oder 5,
**gekennzeichnet durch** die Verwendung von Fräsern mit einem konischen Abschnitt.

7. Verfahren nach einem der Ansprüche 1 bis 6,
**gekennzeichnet durch** die Verwendung vorgefertigter Werkstücke, die so geformt sind, daß sie von einem Meßsystem, insbesondere von einer Cerec-Mundkamera, vermessen werden können.

8. Verfahren nach einem der Ansprüche 1 bis 7,
**gekennzeichnet durch** die Verwendung von Präparationsinstrumenten und/oder vorgefertigten Werkstücken, die so geformt sind, daß sie die manuelle Ausrichtung eines Meßsystems, insbesondere einer Cerec-Mundkamera, entlang der Einschubachse der Präparation unterstützen.

9. Verfahren nach einem der Ansprüche 1 bis 8,
**dadurch gekennzeichnet, daß** Teile der Präparation und/oder der vorgefertigten Teile zu Ausgleichsrechnungen herangezogen werden, um eine optimale Passung zu gewährleisten.

10. Verfahren nach einem der Ansprüche 1 bis 9,
**dadurch gekennzeichnet, daß** in mehreren Schritten gearbeitet wird, wobei die konfektionierten Werkstücke mitvermessen werden, um deren genaue Form und Lage, vorzugsweise über eine Ausgleichsrechnung, zu bestimmen.

11. Verfahren nach einem der Ansprüche 1 bis 10,
**dadurch gekennzeichnet, daß** die Teilfläche zur manuellen Ausrichtung der Kamera herangezogen wird.

12. Verfahren nach einem der Ansprüche 1 bis 11,
**dadurch gekennzeichnet, daß** die Teilfläche zur Orientierungsbestimmung für die Einfügung der Zahnergänzungsteile und/oder anderer Ergänzungsteile herausgezogen wird.

## Claims

1. A process for the production of dentures and implants using CAD/CAM devices employing pre-fabricated parts, in which, following scanning of an object by means of a scanning system, a restorative item is designed by computation and then mechanically machined out of a ceramic blank with reference to the scanned data, **characterized in that** by use of defined preparation instruments and/or the use of pre-fabricated tooth supplements and/or other supplementary parts a starting environment for said CAD/CAM process is created, which includes at least one partial area having a geometrical form known to the software of said CAD/CAM process and that said partial area is utilized by said software for the purpose of achieving an optimal fit over said partial area between the pre-fabricated parts and the denture to be individually produced, **in that**, for calculation of the denture and/or implant in the region of the known partial area, said known geometrical form is utilized or a correction of the scanned data in the region of said partial area is carried out.

2. A process as defined in claim 1, **characterized in that** said scanning system is a Cerec mouth camera.

3. A process as defined in claim 1 or claim 2, **characterized in that** preparation instruments are used of which the geometrical dimensions are adapted to suit commercial pre-fabricated workpieces.

4. A process as defined in any one of claims 1 to 3, **characterized in that** preparation instruments and/or pre-fabricated workpieces are used which are provided with sections that are reproduced in the preparation and can be scanned by a scanning system.

5. A process as defined in claim 2 and claim 4, **characterized in that** said scanning system operates on the basis of active triangulation.

6. A process as defined in claim 4 or claim 5, **characterized by** the use of milling cutters having a conical section.

7. A process as defined in any one of claims 1 to 6, **characterized by** the use of pre-fabricated workpieces which are shaped such that they can be scanned by a scanning system, in particular by a Cerec mouth camera.

8. A process as defined in any one of claims 1 to 7, **characterized by** the use of preparation instruments and/or pre-fabricated workpieces which are shaped such that they assist manual alignment of a scanning system, particularly a Cerec mouth camera, along the axis of insertion of the preparation.

9. A process as defined in any one of claims 1 to 8, **characterized in that** parts of said preparation and/or said pre-fabricated parts are subjected to corrective computation, in order to ensure optimal fit.

10. A process as defined in any one of claims 1 to 9, **characterized in that** it is carried out in several steps, the preformed workpieces also being scanned in order to determine their exact shape and position, preferably by way of corrective computation.

11. A process as defined in any one of claims 1 to 10, **characterized in that** said partial area is utilized for manual alignment of the camera.

12. A process as defined in any one of claims 1 to 11, **characterized in that** said partial area is utilized as orientation means for the purpose of insertion of said tooth supplements and/or other supplementary parts.

## Revendications

1. Procédé pour la fabrication de prothèses dentaires et d'implants avec des équipements CAD/CAM par association de pièces pré-usinées, du type selon lequel après mesure d'un objet au moyen d'un système de mesure, une pièce de prothèse dentaire est élaborée à l'aide d'un ordinateur et est ensuite engendrée, au moyen des données mesurées, à la machine à partir d'une pièce brute en céramique,
**caractérisé en ce que** par utilisation d'instruments de préparation définis et/ou par utilisation de pièces pré-usinées formant complément de dent et/ou d'autres pièces complémentaires, on dispose d'un état initial pour le processus CAD/CAM, qui contient au moins une surface partielle présentant un profil géométrique connu dans le programme logiciel du processus CAD/CAM et **en ce que** la surface partielle issue du programme logiciel est utilisée afin de parvenir à une adaptation optimale avec la surface partielle entre les pièces pré-usinées et la prothèse dentaire à produire individuellement, par le fait que pour le calcul de la prothèse dentaire et/ou de l'implant dans la zone de la surface partielle connue, le profil géométrique connu est utilisé ou par le fait qu'une correction de la mesure intervient dans la zone de la surface partielle.

2. Procédé selon la revendication 1,
**caractérisé en ce que** le système de mesure est une caméra de bouche Cerec.

3. Procédé selon la revendication 1 ou 2,
**caractérisé en ce que** des instruments de préparation sont utilisés, lesquels sont appariés dans leurs dimensions géométriques avec des outillages pré-usinés de façon industrielle.

4. Procédé selon l'une des revendications 1 à 3,
**caractérisé en ce que** des instruments de préparation et/ou des outillages pré-usinés sont utilisés, lesquels sont munis de sections qui sont reproduites dans la préparation et qui sont susceptibles d'être mesurées par un système de mesure.

5. Procédé selon la revendication 2 et 4,
**caractérisé en ce que** le système de mesure travaille selon le procédé de la triangulation active.

6. Procédé selon la revendication 4 ou 5,
**caractérisé par** l'utilisation de fraises avec une section conique.

7. Procédé selon l'une des revendications 1 à 6,
**caractérisé par** l'utilisation d'outillages pré-usinés qui sont conformés de telle façon qu'ils puissent être mesurés par un système de mesure, en particulier par une caméra de bouche Cerec.

8. Procédé selon l'une des revendications 1 à 7,
**caractérisé par** l'utilisation d'instruments de préparation et/ou d'outillages pré-usinés qui sont conformés de telle façon qu'ils supportent l'ajustement manuel d'un système de mesure, en particulier d'une caméra de bouche Cerec, le long de l'axe d'introduction de la préparation.

9. Procédé selon l'une des revendications 1 à 8,
**caractérisé en ce que** des pièces de la préparation et/ou des pièces pré-usinées sont mises à contribution pour des calculs de compensation, afin de garantir une adaptation optimale.

10. Procédé selon l'une des revendications 1 à 9,
**caractérisé en ce qu'**il travaille en plusieurs étapes selon lesquelles les outillages confectionnés sont mesurés conjointement, afin de déterminer leur profil et situation précis, de préférence par le biais d'un calcul de compensation.

11. Procédé selon l'une des revendications 1 à 10,
**caractérisé en ce que** la surface partielle est mise à contribution pour l'ajustement manuel de la caméra.

12. Procédé selon l'une des revendications 1 à 11,
**caractérisé en ce que** la surface partielle relative à la détermination de l'orientation est extraite pour l'insertion des pièces formant complément de dent et/ou d'autres pièces complémentaires.
